# EUROPEAN PATENT APPLICATION

(11) **EP 0 746 131 A1**
(43) Date of publication of application: **04.12.1996**
(21) Application number: 95307464.8
(22) Date of filing: 19.10.1995
(51) Int. Cl.: H04M 1/72, H04Q 7/32

(54) **Radio communication apparatus**

(30) Priority: 03.06.1995 JP 159861/95; 31.07.1995 JP 228679/95
(71) Applicant: TONAMI ELECTRONICS CORPORATION, Tokyo (JP); Denkosha Co., Ltd., Hamamatsu-shi, Shizuoka-ken (JP); Sato, Masatsugu, Zama-shi, Kanagawa-ken (JP); Allophonic Electronics Ltd., Yokohama-shi, Kanagawa-ken (JP); New Japan Packaging Co., Ltd., Tokyo (JP)
(72) Inventor: Sato, Masatsugu, Zama-shi Kanagawa-ken (JP)
(74) Representative: Blatchford, William Michael

(57) **Abstract**

A radio communication apparatus of the invention can securely warn only users of a call-incoming condition without causing any trouble to people nearby at places isolated from the radio communication apparatus when receiving call-incoming signal, and which maintains a good portability, operability, and appearance. The radio communication apparatus comprises; a detecting and warning section (41) for call incoming wherein a radio communication apparatus body (1) detects a receipt of a call-incoming signal and transmits the received condition; and a call device (3) which receives a radiowave transmitted from the detecting and warning section (41) for call incoming at a place away from the radio communication apparatus body (1) to warn of a received condition of the radio communication apparatus, characterized in that the detecting and warning section (41) for call incoming is incorporated in a cell pack (2) which can be attached to and detached from the radio communication apparatus body (1).

## Description

This invention relates to a radio communication apparatus such as a portable telephone, and more particularly to a radio communication apparatus which warns a person of a call incoming by means of an independent calling device.

In recent years, radio communication apparatuses such as compact transceivers, portable telephones, and the like have been rapidly popularized as a means of communication utilizing radio. These radio communication apparatuses can be readily carried to places where a user thereof moves to, and allow to easily communicate with other people at places he or she stays.

For example, on receiving call-incoming signal, portable telephones warn users of a call-incoming condition through a generation of ring back tone from a loudspeaker incorporated therein.

However, the above described conventional portable telephones have some drawbacks such as that ring back tone generated due to a call incoming to a portable telephone can not be heard at noisy places or when the telephone is in a bag, for example suitcase or handbag; that ring back tone gives nearby people an annoyance in a train, theater, conference room, or the like; and that controlled volume of ring back tone in the above mentioned places such as train, theater, conference room sometimes can not be recognized by users.

Therefore some portable telephones have been developed of which body are vibrated in place of ring back tone when the telephones receive a call incoming. However, users need to limit models when buying thus structured portable telephone. Furthermore, such models have to be equipped with large motors to vibrate a telephone body, consuming cell quickly, adversely effect to a circuit within the telephone, and, as an inconvenient matter, have to be always in contact with user's body so that he or she recognizes a call-incoming condition.

The present invention was accomplished in view of the above problems and has an object to provide a radio communication apparatus which can securely warns only users of a call-incoming condition without causing any trouble to people nearby at places isolated from the radio communication apparatus when receiving call-incoming signal, and which maintain a good portability, operability, and appearance.

In a first mode of the invention, in order to solve the above-mentioned problems, a radio communication apparatus according to the present invention comprises; a detecting and warning section for call incoming in which a radio communication apparatus body detects a receipt of a call-incoming signal and transmits the received condition; and a call device which receives a radiowave transmitted from the detecting and warning section for call incoming at a place away from the radio communication apparatus body to warn of a received condition of the radio communication apparatus, characterized in that the detecting and warning section for call incoming is incorporated in a cell pack which can be attached to and detached from the radio communication apparatus body.

In a second mode of the invention, the detecting and warning section for call incoming is characterized by; an ID generating circuit which receives a received signal of the radio communication apparatus body to generate a specific ID; a code generating circuit which generates a code; a transmission output section which transmits the ID and code generated respectively by the ID generating circuit and code generating circuit to the call device via an antenna of the radio communication apparatus body; and the call device is comprised of; an ID selective circuit which selects an ID in the carrier wave transmitted from the transmission output section; a code coincidence circuit which confirms a coincidence with the code; and a warning means which operates when it coincides with the ID and code received by an ID and code preliminarily fixed in the ID generating circuit and code generating circuit.

In a third mode of the invention, the detecting and warning section for call incoming is characterized in that the input side thereof is provided with a connection connector to be connected to an earphonejack of the radio communication apparatus body.

In a fourth mode of the invention, the detecting and warning section for call incoming is characterized by consisting of a microprocessor and a transmission output section.

In a fifth mode of the invention, the transmission output section in the cell pack is provided with a connection connector to be connected to an antenna connection terminal provided on the bottom of the radio communication apparatus body.

In a sixth mode of the invention, the detecting and warning section for call incoming is characterized in that the section being separated from the radio communication apparatus body is removably fixed to the outside of the radio communication apparatus body and has a receiving circuit which receives, via an antenna, section a signal leaking out of an intermediate-frequency circuit of the radio communication apparatus body.

In a seventh mode of the invention, the antenna section is characterized in that it is incorporated in the detecting and warning section for call incoming and has a plurality of antennas capable of respectively receiving signals having a plurality of frequency bands.

In an eighth mode of the invention, the radio communication apparatus comprises; a detecting and warning section for call incoming incorporated in the radio communication apparatus body and which detects that the radio communication apparatus body received a call-incoming signal and transmits the received condition; and a call device which receives a radiowave transmitted from the detecting and warning section for call incoming at a place away from the radio communication apparatus body to warn of the received condition of the radio communication apparatus, characterized in that the detecting and warning section for call incoming has a microcomputer which determines a call signal in the radio communication apparatus body and generates a specific code and ID and a transmission output section which transmits via a carrier wave the code and ID generated by the microcomputer, and that the call device has an ID selective circuit which selects the ID in the carrier wave transmitted from the transmission output section, a code coincidence circuit which confirms a coincidence with the code; and a warning means which operates when the ID and code preliminarily fixed in the ID selective circuit and code coincidence circuit coincides with the received ID and code.

In a ninth mode of the invention, the warning means is characterized by a vibration generating section which warns of a received condition of the radio communication apparatus body.

In a tenth mode of the invention, the warning means is characterized by a light generating section which warns of a received condition of the radio communication apparatus body.

According to the first mode of the invention, the detecting and warning section for call incoming for detecting the call-incoming condition of the radio communication apparatus body and transmitting the radiowave to the call device is incorporated in the cell pack, so that the section prevents itself from being exposed outside the radio communication apparatus body, whereby maintaining a good operability, portability, and appearance of the radio communication apparatus body. Furthermore, the detecting and warning section for call incoming can be readily fixed on a commercially available radio communication apparatus only by exchanging the cell pack.

According to the second mode of the invention, the call status during a call incoming and ringing, conversation, and call waiting can be positively determined by directly taking out a call-incoming radiowave received by the radio communication apparatus body, for example from a radio receiving decision circuit or an earphone connection terminal.

When a received signal from the radio receiving decision circuit is received, the ID and code is transmitted from the transmission output section to the call device by a carrier wave through an antenna of the radio communication apparatus body after a code generated from the code generating circuit and an ID generated from the ID generating circuit are multiplied.

Furthermore, the ID and code transmitted from the transmission output section are compared with an ID preliminarily fixed in the ID selective circuit, and when these IDs coincide with each other, an output signal is transmitted to the code coincidence circuit where the code is determined whether it coincides with a model or not. If it coincides with the model, the warning means operates to warn a user of the received condition of radio communication apparatus body.

According to the third mode of the invention, the call status of the radio communication apparatus body during a call incoming and ringing, conversation, and call waiting is input from the earphonejack to the detecting and warning section for call incoming within the cell pack via the connection connector.

According to the fourth mode of the invention, the detecting and warning section for call incoming consisting of a microcomputer and a transmission output section can be compactly housed in the cell pack.

According to the fifth mode of the invention, by fitting the cell pack to the radio communication apparatus body so that the connection connector of the transmission output section of the cell pack is connected to the antenna connection terminal provided on the bottom of the radio communication apparatus body, the signal from the transmission output section is transmitted from the antenna of the radio communication apparatus body to the call device. For example, the connection connector fixedly provided on the bottom of the cell pack will allow the transmission output section to be automatically connected to the antenna of the radio communication apparatus body only by fitting the cell pack to the radio communication apparatus body.

According to the sixth mode of the invention, the detecting and warning section for call incoming is removably fixed to the radio communication apparatus body, so that the section can be fixed for use to conventional radio communication apparatuses having only ring back tone as a warning means. When the detecting and warning section for call incoming receives a call-incoming signal, an ultra-slight signal leaking out of an intermediate-frequency circuit of the radio communication apparatus body is received by a receiving circuit via an antenna section incorporated inside the detecting and warning section for call incoming. The detecting and warning section for call incoming which is directly fixed to the outside of the radio communication apparatus body allows a signal leaking out of the radio communication apparatus body to be sufficiently detected even if the signal is ultra slight. For instance, the sensitivity of the receiving circuit is made receivable with respect to only an ultra-slight signal, only a signal of the fitted radio communication apparatus body will be received regardless of presence of a plurality of radio communication apparatuses nearby, which eliminates a disadvantageous possibility of radio interference with other radio communication apparatuses.

According to the seventh mode of the invention, the antenna section is incorporated in the detecting and warning section for call incoming and has a plurality of antennas capable of respectively receiving signals having a plurality of frequency bands so as to be able to receive various call-incoming signals such as of analog and digital having different frequency bands.

According to the eighth mode of the invention, the detecting and warning section for call incoming being incorporated in the radio communication apparatus body eliminates the need of providing a detecting and warning section for call incoming inside the cell pack.

According to the ninth mode of the invention, the call device for example stowed in a pocket of a jacket or shirt will make a user to be aware of the received condition of the radio communication apparatus body via a vibration of the vibration generating section. The warning by vibration will allow the user to recognize the received condition without causing any trouble to nearby people.

According to the tenth mode of the invention, the call device positioned at a place viewable by a user will allow only the user to recognize the received condition by means of light emitted from the radio communication apparatus body.

The gist of the present invention is not limited to the above description, and the objects, advantages, features and uses of this invention will become more apparent with reference to the following description taken in conjunction with the accompanying drawings. It should be understood that the present invention may be modified suitably without departing from the spirit or scope of the invention and that such modifications are all included within the scope of the invention.
Fig. 1 is a perspective view illustrating a whole appearance of a radio communication apparatus according to the present invention,
Fig. 2 is a block diagram showing a connection status of a circuit between the radio communication apparatus body and a cell pack according to Fig. 1,
Fig. 3 is a block diagram of another embodiment showing a connection status of a circuit between the radio communication apparatus body and the cell pack according to Fig. 1,
Fig. 4 is a block diagram showing a circuit construction of a detecting and warning device for call-incoming according to Fig. 1,
Fig. 5 is a block diagram showing a circuit construction of a call device according to Fig. 1,
Fig. 6 is an explanatory view showing a later described second embodiment of the radio communication apparatus according to the present invention, wherein the radio communication apparatus body and the cell pack are connected via a cable connector,
Fig. 7 is an explanatory view showing an another embodiment of a connection status of the radio communication apparatus body and the cell pack according to Fig. 6, and
Fig. 8 is a perspective view showing a later described third embodiment of the radio communication apparatus according to the present invention and illustrating the whole appearance of the radio communication apparatus body.

Preferred embodiments of the present invention are now described referring to the drawings.

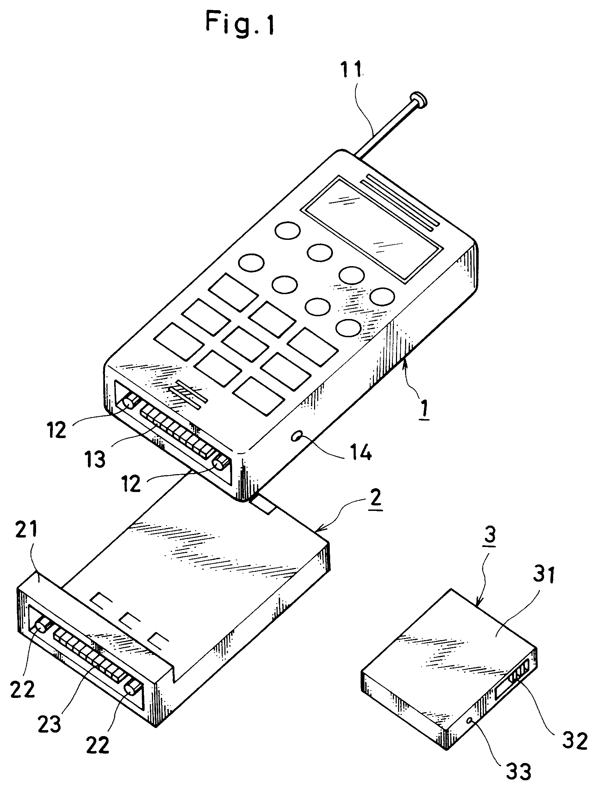

In the embodiments, the radio communication apparatus is applied to a portable telephone which warns of a call-incoming condition via a ring back tone, and Fig. 1 is a perspective view illustrating a whole appearance of the embodiments.

In the Figures, the reference numeral 1 denotes a portable telephone as a radio communication apparatus body, 2 denotes a cell pack, and 3 denotes a call device. The portable telephone 1 has an antenna 11 mounted on the top thereof, a connection terminal 12 for an external transmitting and receiving antenna which is also connected to the antenna 11 and a connection terminal 13 for communication data, both terminals provided on the bottom thereof, and an earphonejack 14 provided on the side thereof.

The cell pack 2 is formed in a manner that it is removably fitted onto a recess (not shown) defined on the back of the portable telephone 1 so as to be integrated therewith, and on the bottom of the cell pack 2 is provided with a protrusion 21 covering the bottom of the telephone 1. On the upper surface of the protrusion 21 are provided with connection connectors 22 and 23 to be connected respectively with connection terminals 12 for the antenna of the portable telephone 1 and with 13 for communication data. The lower part of the connection connectors 22 and 23 having similar shapes to those of the connection terminals 12 and 13 of the portable telephone 1 is externally exposed. The connection connector 22 is connected to an input side of a later described detecting and warning device for call incoming within the cell pack 2.

The call device 3 is separated from the portable telephone 1 and carried by a user being put in a pocket of for example a shirt. A case body 31 of the call device 3, having a rectangular shape of a pocketable size, and provided with on the side thereof an electric power switch 32 and change-over switch 33 for switching ID.

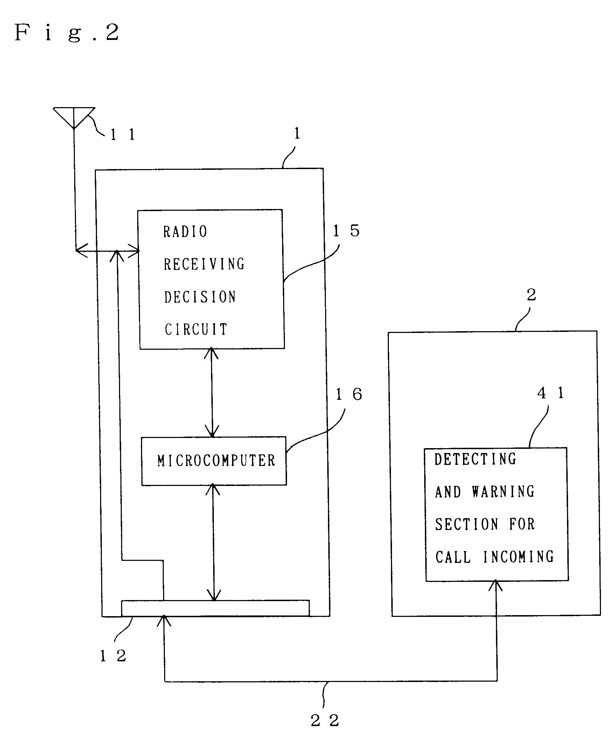

Fig. 2 is a block diagram showing a connection status of a circuit between the radio communication apparatus 1 and a cell pack 2, and the radio communication apparatus 1 is provided with inside thereof a radio receiving decision circuit 15, microcomputer 16, etc. The radio receiving decision circuit 15 is, as conventional radio receiving circuit, comprised of frequency conversion circuit, BPF, IF circuit, detection/demodulation circuit, etc. The circuit 15 picks up information about telephone numbers included in the received radiowave received by the antenna 11, transmits the radiowave to the microcomputer 16 as a digital signal, generates a ring back tone of the radio communication apparatus 1, and conducts various kinds of control.

On the other hand, the cell pack 2 is provided with inside thereof a detecting and warning section 41 for call incoming, thereby detecting that the radio communication apparatus 1 received a coll-incoming signal via the connection connector 22 which is connected to the connection terminal 12, and at the same time transmits the call-incoming condition from the connection connector 22 to the side of the radio communication apparatus 1 via the connection terminal 12, and from the antenna 11 of the radio communication apparatus 1 to the external call device 3.

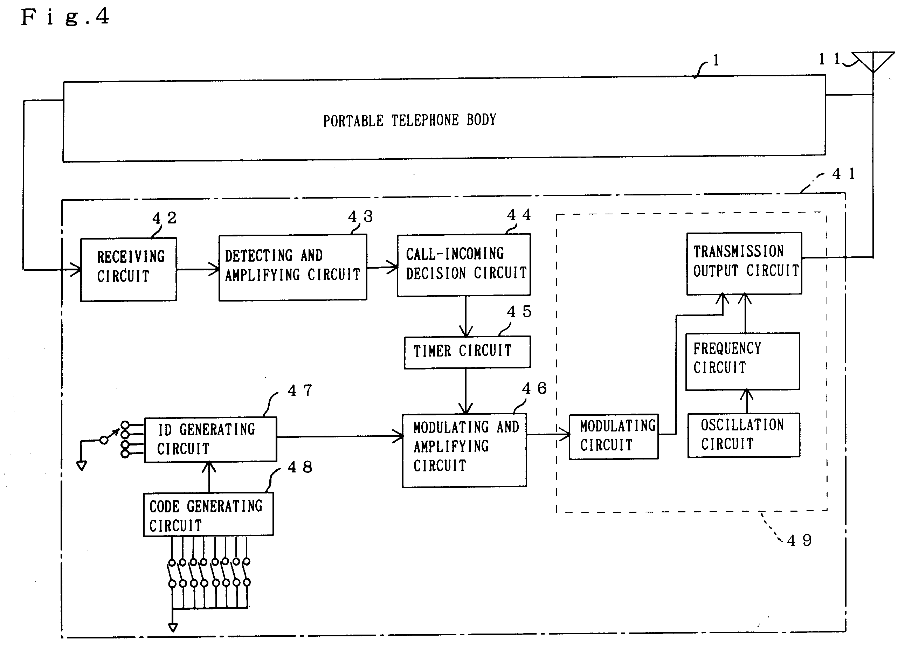

The detecting and warning section 41 for call incoming comprises as shown in Fig. 4, a receiving circuit 42 which receives a signal picked up from the radio communication apparatus 1, a detecting and amplifying circuit 43 which is connected to the receiving circuit 42, a call-incoming decision circuit 44 which is connected to the detecting and amplifying circuit 43, a timer circuit 45 which is connected to the call-incoming decision circuit 44, a modulating and amplifying circuit 46 which is connected to the timer circuit 45, an ID generating circuit 47 which is connected to the modulating and amplifying circuit 46, a code generating circuit 48 which is connected to the ID generating circuit 47, and a conventional radio transmitting circuit as a transmission output section 49 which is connected to the modulating and amplifying circuit 46.

A call-incoming signal taken out from the radio communication apparatus 1 is fed to the detecting and amplifying circuit 43 after unnecessary frequency component thereof is eliminated. In the detecting and amplifying circuit 43, an RF signal received is amplified to a supply voltage level which allows to determine whether the RF signal has received radiowaves or not. Subsequently, the call-incoming decision circuit 44 determines the communication system is an analog or digital, and then starts the next timer circuit 45 when the call incoming is in a normal condition. When the timer circuit 45 is started, a power supply applied to circuits including the timer circuit 45 and thereafter is switched on for only a certain period of time, reducing a power consumption in a stand-by condition as much as possible.

When the power supply is switched on, an 8-bit model code signal is generated in the code generating circuit 48, the model code signal generated is multiplied by an ID signal which is generated in the ID generating circuit 47, then fed, as 8-bit serial data, to the modulating and amplifying circuit 46, and furthermore fed from the modulating and amplifying circuit 46 to the transmission output section 49, and subsequently the ID and code are transmitted from the antenna 11 of the radio communication apparatus 1, the antenna 11 being connected to the transmission output section 49 via the connection connector 22, to the external call device 3.

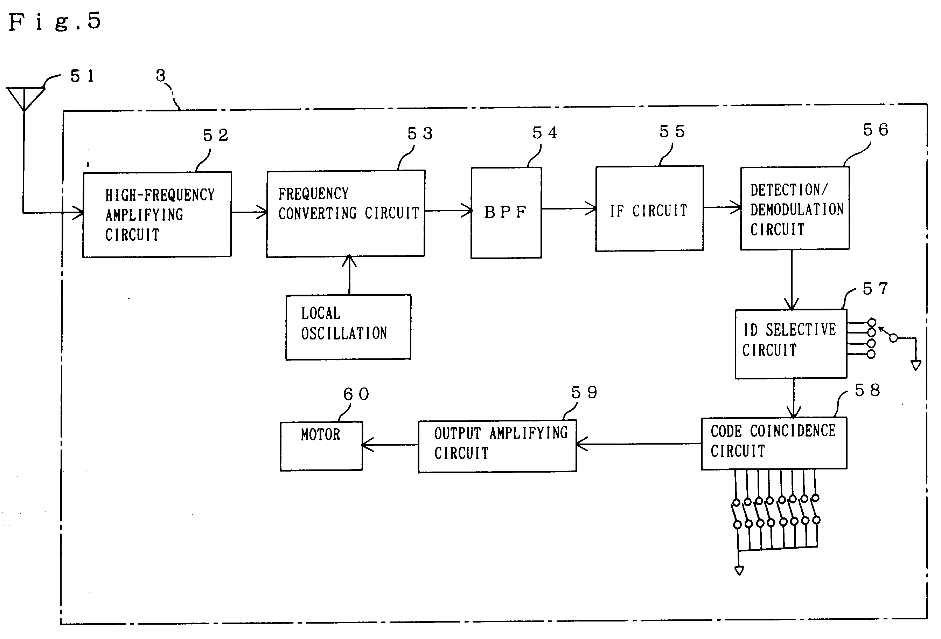

The call device 3 is, as shown in Fig. 5, comprised of an antenna 51 which receives radiowaves transmitted from the antenna 11 of the radio communication apparatus 1, a high-frequency amplifying circuit 52 which is connected to the antenna 51, a frequency converting circuit 53 which is connected to the high-frequency amplifying circuit 52, a BPF circuit 54 which is connected to the frequency converting circuit 53, an IF circuit 55 which is connected to the BPF circuit 54, a detection/demodulation circuit 56 which is connected to the IF circuit 55, an ID selective circuit 57 which is connected to the detection/demodulation circuit 56, a code coincidence circuit 58 which is connected to the ID selective circuit 57, an output amplifying circuit 59 which is connected to the code coincidence circuit 58, and a driving motor 60 for a warning means, which is connected to the output amplifying circuit 59.

The radiowaves transmitted from the antenna 11 of the radio communication apparatus 1 are initially received by the antenna 51 of the call device 3, subjected to a high-frequency amplifying in the high-frequency amplifying circuit 52, and subjected to a high-frequency switching in the frequency converting circuit 53 in order to reduce the frequency, removed necessary frequency components thereof in the BPF 54, then amplified in the IF circuit 55, i.e. intermediate frequency amplifying circuit, detected and demodulated in the detection/demodulation circuit 56 so as to be removed of the ID signal as serial data.

Subsequently, the demodulated serial data are compared with an ID code which is preliminarily fixed by the ID selective circuit 57, and when the data coincide with the ID code, output signals are generated to be switched to a level of digital signals and fed to the code coincidence circuit 58. The output signals which are fed to the code coincidence circuit 58 are subject to serial/parallel data switching to be determined to coincide with model code signals which are output by switching. When determined to be coincided with the model code signals, the output signals drive the motor 60 of the warning means via the output amplifying circuit 59 in order to generate vibrations, thereby warning a user of a call-incoming condition of the radio communication apparatus 1.

The radio communication apparatus according to the present embodiment as constructed above, upon receiving a call-incoming signal, the portable telephone 1 detects the call-incoming condition through the detecting and warning section 41 for call incoming which is incorporated in the cell pack 2 and transmits again to the independent call device 3 from the antenna 11 of the portable telephone 1, which can be recognized through vibrations of the call device 3, thereby for instance allowing users to use even at noisy places or when the portable telephone is carried in a bag, for example suitcase or handbag, or in a train, theater, conference room, or the like without causing any trouble to nearby people, provided that the call device 3 is in a pocket of for example a shirt and the ring back tone of the portable telephone 1 is kept switched off. If a user of the call device 3 is away from the portable telephone 1, he or she can recognize a received condition of the portable telephone 1.

The call device 3 can have a specific ID therein which will prevent the call device 3 from reacting to another portable telephone present close thereto, thereby allowing users to securely identify the call-incoming condition of their own portable telephone. Additionally speaking, by employing a plurality of call devices having the same ID therein for a single portable telephone, a plurality of users can simultaneously identify the call-incoming condition of the portable telephone.

Furthermore, the detecting and warning section 41 for call incoming which is incorporated in the cell pack 2 allows itself to be readily fixed for use on a commercially available portable telephone only by exchanging the cell pack 2, and to maintain a good portability, operability, and appearance, without any extra devices exposed outside the portable telephone.

Since signals are directly taken out of the radio receiving decision circuit of the portable telephone 1 to the detecting and warning section 41 for call incoming, the call status of a portable telephone can be securely determined. In addition to that, since the signals transmitted from the detecting and warning section 41 for call incoming is transmitted by means of the antenna 11 of the portable telephone 1 and electric source is supplied from the cell pack 2, the detecting and warning section 41 for call incoming eliminates antennas, electric sources, etc., thereby enabling the detecting and warning section 41 for call incoming to be miniaturized.

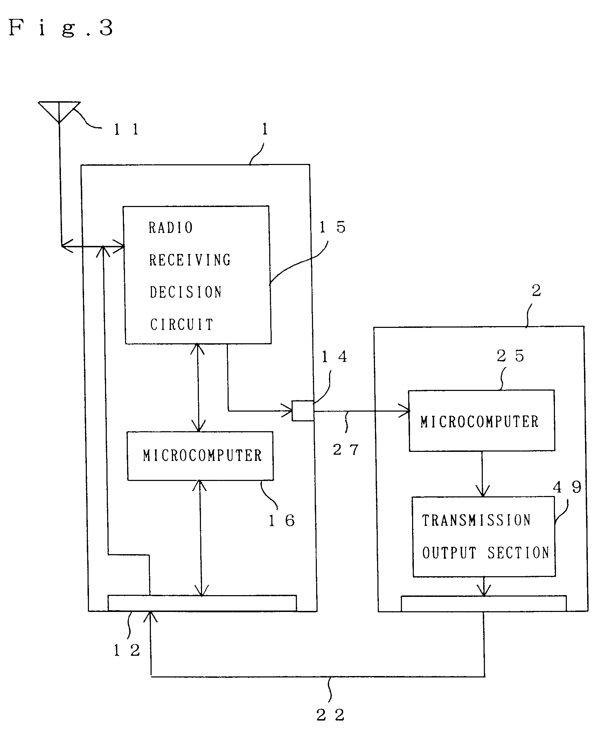

As shown in Fig. 3, the detecting and warning section 41 for call incoming in the cell pack 2 may consist of a microcomputer 25 and the transmission output section 49, wherein the digital signal taken out of the portable telephone 1 is determined whether it is a call-incoming signal or not in order that ID or code is generated to be transmitted from the antenna 11 of the portable telephone 1 via the transmission output section 49 and the connection connector 22 in this order. Alternatively, the input side of either the detecting and warning section 41 for call incoming or the microcomputer 25 is provided with a connection connector 27 which is to be connected to the earphonejack 14 in order to receive a talking status during a call incoming and ringing, conversation, and call waiting.

Furthermore, it is preferable that the detecting and warning section 41 for call incoming is integrally incorporated into another circuit, formed with a unitary circuit on a single circuit board of the section 41 for call incoming to be connected to another circuit, or fixed to a predetermined position of the cell pack 2 with a circuit board incorporated into a case independent of the section 41 for call incoming.

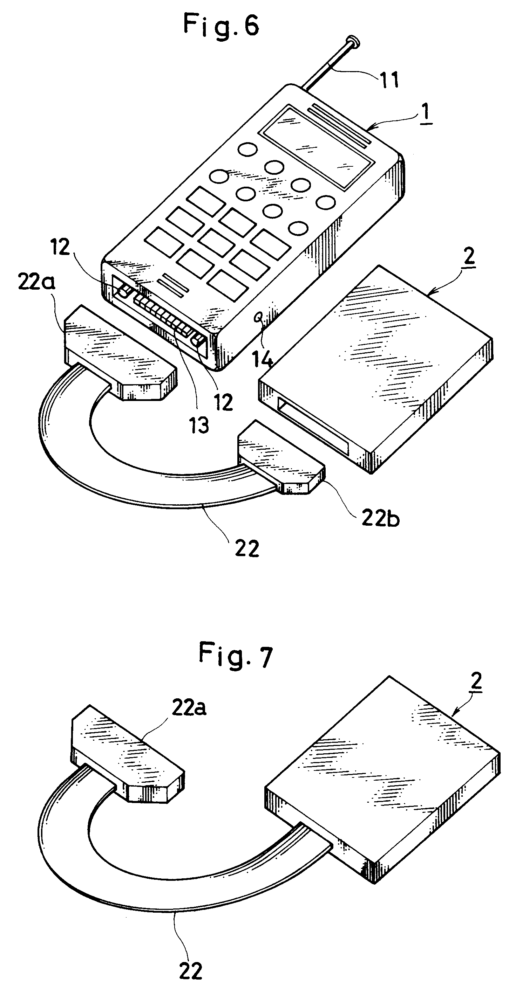

Next, a second embodiment of the present invention is described with reference to Fig. 6.

In the second embodiment, a cable connector is used as the connection connector 22 of the cell pack 2, and the cable connector 22 is adapted to be exchanged in accordance with portable telephones of various types which have different specifications. Other constitutions in the second embodiment are the same as in the embodiment described above.

This constitution can be applied to many models of portable telephones only by exchanging the cable connector 22 without changing the specification of the cell pack 2.

The cable connector 22 as shown in Fig. 6 is provided with connectors 22a and 22b at the both ends thereof so as to be removable with respect to the cell pack 2, while the cable connector 22 as shown in Fig. 7 is provided with a connector 22a only at the side of the the portable telephone 1.

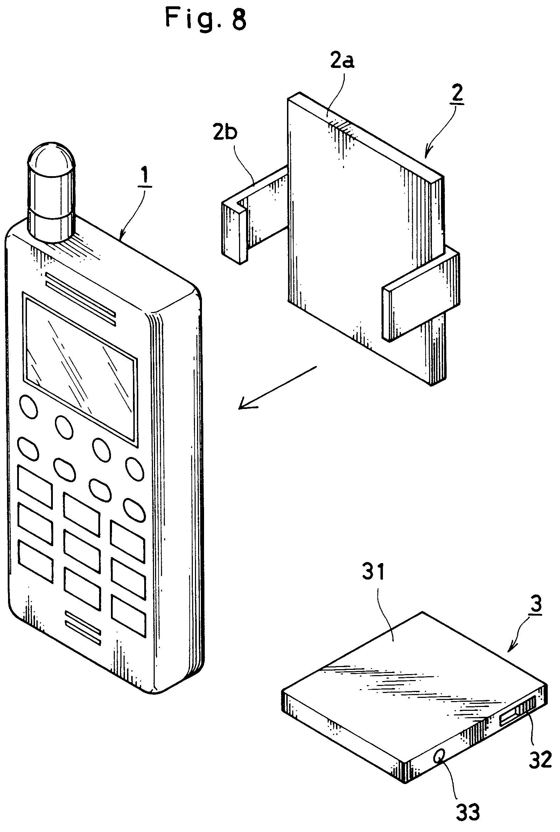

Next, a third embodiment of the present invention is described with reference to Fig. 8.

In the third embodiment, the radio communication apparatus according to the present invention is adapted to be applied to a portable telephone which warns a conventional call-incoming condition by means of ring back tone as in the first embodiment. Fig. 8 is a perspective view illustrating a whole appearance of the third embodiments. It is to be noted that the same portions as in the first embodiment are given reference numerals common to those in the first embodiment for the purpose of omitting explanations.

In the Figure, the reference numeral 1 denotes a portable telephone as a radio communication apparatus body, 2 denotes a detecting and warning section for call incoming, and 3 denotes a call device. The detecting and warning section 2 for call incoming is employed as removably fixed on the back of a portable telephone 1, which consists of a device body 2a formed into a thin and rectangular shape in accordance with the shape of a portable telephone and an attaching arm 2b provided on the side of the device body 2a.

The detecting and warning section 2 for call incoming has an essentially the same circuit constitution as that shown in Fig. 4 of the first embodiment except that the receiving circuit 42 is provided with a receiving antenna section for receiving ultra slight radiowave leaking out of an intermediate-frequency circuit of the portable telephone body 1, and that a transmission output circuit of an FM transmission circuit 49 is provided with a transmission antenna section for transmitting radiowave to the call device.

The receiving antenna section comprises a plurality of antennas provided on a circuit board incorporated in the detecting and warning section 2 for call incoming, which antennas allows the respective antennas to receive each signal of different frequency band. In the embodiment, the receiving bands range from 700 MHz to 2.1 GHz, and when the portable telephone 1 receives a call-incoming signal, the receiving antenna section receives ultra slight signal leaking out of the portable telephone 1. The ultra slight signal is for example a signal leaking from the output terminal of the first step of a plurality of down-converters in intermediate-frequency circuits as a down-converter incorporated in the portable telephone 1. The signal is 854 MHz, i.e. 934 MHz as an input signal - 80 MHz as a local oscillating frequency, in the case of an analogue-type portable telephone, and 1350 MHz, i.e. 1430 MHz as an input signal - 80 MHz as a local oscillating frequency, in the case of a digital-type portable telephone. ID and code are transmitted by a carrier wave from the transmission antenna, and the transmitted radiowave can be received in a range of 100 meters in the case of the present embodiment.

As a fourth embodiment, the detecting and warning section for call incoming which is provided inside the cell pack 2 in the above described first embodiment may be directly incorporated in the microcomputer of the portable telephone 1.

In such a case, the radio receiving decision circuit of the body of the portable telephone 1 is constituted similarly to a conventional FM receiving circuit, and a digital signal output from the FM receiving circuit is determined by the detecting and warning section for call incoming incorporated in the microcomputer 16 whether or not a call-incoming signal, so that a call-incoming signal is output.

The output signal corresponds to the counterpart from the timer circuit 45 of the detecting and warning section 41 for call incoming in the above described first embodiment and generates a ring back tone of the portable telephone 1. The microcomputer 16 can alternatively generate ID and code which are to be transmitted by a carrier wave. Therefore, the cell pack 2 eliminates the need of being provided inside thereof with a detecting and warning section for call incoming.

In the meantime, the above embodiment shows that a vibration generating section drives a motor to generate a vibration, but it is also possible to employ for example a piezo-electric element as another construction of a vibration generating section.

As a warning means of a call-incoming condition, a light generating section may be employed in addition to the vibration generating section, wherein for example an LED, i.e. light emitting diode is provided to effect the light emitting diode for a predetermined period of time, and to add a light circuit in order to light the light emitting diode.

In the above embodiment, being applied to a portable telephone, the present invention is not limited to such an application. For example, it goes without saying that the invention can be applied to radio communication apparatuses other than portable telephones such as personal handyphone systems, i.e. PHS, transceivers, and the like.

As described above, the radio communication apparatus according to the present invention comprises a detecting and warning section for call incoming which detects the radio communication apparatus body has received a call-incoming signal, and a call device which warns the receiving condition, and the detecting and warning section for call incoming is integrally incorporated in the cell pack so as not to be exposed outside the portable telephone body. Thus the appearance of the radio communication apparatus is not changed, and a good portability, operability, and appearance are maintained. Furthermore, the detecting and warning section for call incoming can be readily fixed to commercially available radio communication apparatuses only by exchanging the cell pack.

According to the second mode of the present invention, the detecting and warning section for call incoming comprises an ID generating circuit which generates specific ID, a code generating circuit which generates a code, and a transmission output section which transmits the ID and code generated to the call device via the antenna of the radio communication apparatus body, while the call device comprises an ID selective circuit which selects an ID in the carrier wave, a code coincidence circuit which confirms a coincidence with ID, and a warning means which operates when the ID and code received coincide with each other, so that the radio communication apparatus can securely warns only specific call devices a call-incoming condition without causing any trouble to people nearby at places isolated therefrom when receiving call-incoming signal.

According to the sixth mode of the present invention, the detecting and warning section for call incoming is removably fixed to the radio communication apparatus body, so that the section can be fixed to conventional radio communication apparatuses having only ring back tone as a warning means, and since the detecting and warning section for call incoming is directly fixed to the outside of the the radio communication apparatus body, it can sufficiently detect a signal even if the signal leaking out of the portable telephone body is ultra slight.

According to the eighth mode of the present invention, the radio communication apparatus incorporating a detecting and warning section for call incoming therein eliminates the need of providing another detecting and warning section for call incoming inside the cell pack.

## Claims

1. A radio communication apparatus (1) comprising:
a detecting and warning section (41) for call incoming in which a radio communication apparatus body (1) detects a receipt of a call-incoming signal and transmits the received condition; and
a call device (3) which receives a radiowave transmitted from said detecting and warning section (41) for call incoming at a place away from said radio communication apparatus body (1) to warn of a received condition of said radio communication apparatus (1), characterised in that said detecting and warning section (41) for call incoming is integrally provided in a cell pack (2) which can be attached to and detached from said radio communication apparatus body (1).

2. The radio communication apparatus according to claim 1, characterised in that said detecting and warning section (41) for call incoming comprising:
an ID generating circuit (47) for receiving a received signal of said radio communication apparatus body (1) to generate a specific ID;
a code generating circuit (48) for generating a code; and
a transmission output section (49) for transmitting said ID and code both generated by said ID generating circuit (47) and code generating circuit (48) respectively, to the call device (3) via an antenna (11) of said radio communication apparatus body (1), characterised in that said call device (3) having; an ID selective circuit (57) for selecting an ID in said carrier wave transmitted from said transmission output section (49), and a code coincidence circuit (58) for confirming a coincidence with said code; and
a warning means operating when an ID and code preliminarily fixed in said ID generating circuit (47) and code generating circuit (48) coincide with said ID and code received.

3. The radio communication apparatus according to claim 1 or 2, characterised in that an input side of said detecting and warning section (41) for call incoming is provided with a connection connector (22) to be connected to an earphonejack (14) of said radio communication apparatus body (1).

4. The radio communication apparatus according to claims 1 to 3, characterised in that said detecting and warning section (41) for call incoming comprising a microcomputer (16) and a transmission output section (49).

5. The radio communication apparatus according to claims 1 to 4, characterised in that said transmission output section (49) in said cell pack (2), being provided with a connection connector (22) to be connected to an antenna connection terminal (12) provided on the bottom of said radio communication apparatus body (1).

6. The radio communication apparatus according to claim 1, characterised in that said detecting and warning section (41) for call incoming being separated from said radio communication apparatus body (1) is removably fitted to the outside of the radio communication apparatus body (1) and has a receiving circuit (42) which receives a signal leaking out of an intermediate-frequency circuit of said radio communication apparatus body (1) via an antenna section.

7. The radio communication apparatus according to claim 6, characterised in that said antenna section is incorporated in said detecting and warning section (41) for call incoming and has a plurality of antennas capable of respectively receiving signals, said signals having a plurality of frequency bands.

8. A radio communication apparatus comprising:
a detecting and warning section (41) for call incoming being incorporated in said radio communication apparatus body (1) and detecting that said radio communication apparatus body (1) received a call-incoming signal and transmitting the received condition; and
a call device (3) for receiving a radiowave transmitted from said detecting and warning section (41) for call incoming at a place away from said radio communication apparatus body (1) to warn of a received condition of said radio communication apparatus (1), characterised in that said detecting and warning section (41) for call incoming having a microcomputer (16) for determining a call signal in said radio communication apparatus body (1) and generating a specific code and ID; and
a transmission output section for transmitting via a carrier wave a code and ID generated by said microcomputer (16),
said call device (3) having an ID selective circuit (57) for selecting an ID in said carrier wave transmitted from said transmission output section (49), and a code coincidence circuit for confirming a coincidence with a code; and
a warning means operating when an ID and code preliminarily fixed in the ID selective circuit and code coincidence circuit (58) coincide with said received ID and code.

9. The radio communication apparatus according to claim 2 or 6, characterised in that said warning means having a vibration generating section for warning of a received condition of said radio communication apparatus body (1).

10. The radio communication apparatus according to claim 2 or 6, characterised in that said warning means having a light generating section for warning of a received condition of said radio communication apparatus body (1).
